# EUROPÄISCHE PATENTANMELDUNG

(11) **EP 0 584 782 A1**
(43) Veröffentlichungstag der Anmeldung: **02.03.1994**
(21) Anmeldenummer: 93113480.3
(22) Anmeldetag: 24.08.1993
(51) Int. Cl.: B60R 21/24

(54) **Gassack-Rückhaltesystem für Fahrzeuge**

(30) Priorität: 25.08.1992 DE 9211421 U
(71) Anmelder: TRW Occupant Restraint Systems GmbH, D-73553 Alfdorf (DE)
(72) Erfinder: Lutz, Joachim, D-73579 Schechingen (DE); Stütz, Michael, D-73565 Spraitbach (DE)
(74) Vertreter: Degwert, Hartmut, Dipl.-Phys.

(57) **Zusammenfassung**

In einem Gassack-Rückhaltesystem für Fahrzeuge weist der Gassack (6) wenigstens zwei Kammern (20, 22) auf, von denen die erste, größere (20) die zweite (22) umgibt. Die erste Kammer (20) ist durch eine Wandung begrenzt, deren Material eine größere Gasdurchlässigkeit aufweist als das die zweite Kammer (22) begrenzende Material. Durch diese Ausbildung des Gassacks wird der Fahrzeuginsasse über die Dauer eines Aufpralls hinaus auch bei einem Folgeaufprall geschützt.

## Beschreibung

Die Erfindung betrifft ein Gassack-Rückhaltesystem für Fahrzeuge. Ein Gassack-Rückhaltesystem enthält einen Gassack, der sich in einer Unfallsituation beispielsweise zwischen dem Lenkrad und dem Fahrer entfaltet und seinen Oberkörper großflächig abstützt. Der Gassack fällt aber innerhalb von etwa 100 Millisekunden in sich zusammen und bietet dann keinen Schutz mehr, wenn sich im Verlauf eines komplexen Unfallgeschehens ein weiterer, sogenannter Sekundäraufprall ereignet. Auch wenn der Sekundäraufprall zumeist schwächer als der Primäraufprall ist, besteht besonders für den Kopf des Fahrzeuginsassen die Gefahr, gegen harte Teile zu stoßen, insbesondere gegen den nun nicht mehr abgedeckten Gasgenerator der Aufblasvorrichtung.

Der Erfindung liegt die Aufgabe zugrunde, ein Gassack-Rückhaltesystem zu schaffen, das einen Fahrzeuginsassen über die Dauer eines ersten Fahrzeugaufpralls hinaus auch bei einem Sekundäraufprall schützt.

Diese Aufgabe wird erfindungsgemäß gelöst durch ein Gassack-Rückhaltesystem für Fahrzeuge, mit einem Gassack, der wenigstens zwei Kammern aufweist, von denen die erste, größere die zweite umgibt und durch eine Wandung begrenzt ist, deren Material eine größere Gasdurchlässigkeit aufweist als das die zweite Kammer begrenzende Material. Die erste Kammer schützt den Fahrzeuginsassen bei dem Primäraufprall, fällt jedoch anschließend schnell zusammen, während die zweite Kammer so lange gefüllt bleibt, daß sie auch noch bei einem Sekundäraufprall ein schützendes Gaspolster bildet.

Bei einer besonders zweckmäßigen Ausführungsform verläuft eine Zwischenwand durch den Gassack, die den Gassack in die erste und die zweite Kammer unterteilt. Beide Kammern können mit einer gemeinsamen Aufblasvorrichtung oder mit separaten Aufblasvorrichtungen in Verbindung stehen. Es ist jedoch vorteilhaft, wenn nur die erste Kammer mit einer Aufblasvorrichtung in Verbindung steht und die Zwischenwand wenigstens eine Ventilklappe aufweist, die eine Gasströmung von der ersten in die zweite Kammer zuläßt, bei entgegengesetzter Strömungsrichtung aber schließt.

Um eine zuverlässige Entfaltung der zweiten Kammer zu gewährleisten, ist es zweckmäßig, wenn an der Zwischenwand Fangbänder zur Festlegung ihrer Lage im entfalteten Gassack befestigt sind. Eine andere Maßnahme zur Beeinflussung der Gassackentfaltung besteht darin, einen Teil der Zwischenwand mit einer geringeren Fläche als den nach außen freiliegenden Wandungsteil der zweiten Kammer auszubilden, so daß der Gasdruck die zweite Kammer in eine Form bringt, in der die Zwischenwand im wesentlichen eben und die äußere Kammerwand konvex gewölbt ist.

Bei einer weiteren, ebenfalls sehr zweckmäßigen Ausführungsform umschließt ein Außen-Gassack einen kleineren Innen-Gassack. Die erste und die zweite Kammer können beide über entsprechende Öffnungen mit einer gemeinsamen Aufblasvorrichtung direkt in Verbindung stehen. Das System kann aber auch so ausgelegt sein, daß nur die zweite Kammer direkt mit einer Aufblasvorrichtung in Verbindung steht und die erste Kammer über das an sich relativ dichte, für das unter hohem Druck aus der Aufblasvorrichtung austretende Gas aber effektiv durchlässige Gewebe des Innen-Gassacks gefüllt wird. Dabei bildet der Innen-Gassack ein Filter gegen Partikel in den Gasen, die aus der Aufblasvorrichtung strömen.

Vorhandene Gassack-Konstruktionen lassen sich ohne weiteres zu einem erfindungsgemäßen System umrüsten. Man muß im wesentlichen nur den Gassack ändern, etwa mit einer Zwischenwand oder mit einem Innen-Gassack versehen. Da ein Sekundäraufprall im allgemeinen weitaus schwächer als der vorangegangene Primäraufprall ist, kann die zweite Kammer ein wesentlich geringeres Volumen als die erste Kammer aufweisen.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: einen fahrerseitigen Längsschnitt durch ein Fahrzeug mit einem am Lenkrad angeordneten Gassack-Rückhaltesystem, dessen Gassack vollständig aufgeblasen ist;
- Fig. 2: veranschaulicht das Eintauchen des Fahrzeuginsassen in den Gassack bei einem Primäraufprall;
- Fig. 3: entspricht Fig. 1 kurze Zeit nach dem Primäraufprall, wobei der Gassack im wesentlichen in sich zusammengefallen ist;
- Fig. 4: veranschaulicht die Schutzwirkung des in Fig. 1 bis 3 gezeigten Gassacks bei einem Sekundäraufprall; und
- Fig. 5 bis 8: zeigen eine andere Ausführungsform des Gassacks und veranschaulichen seine Schutzwirkung wie nach den Figuren 1 bis 4 in zeitlicher Reihenfolge.

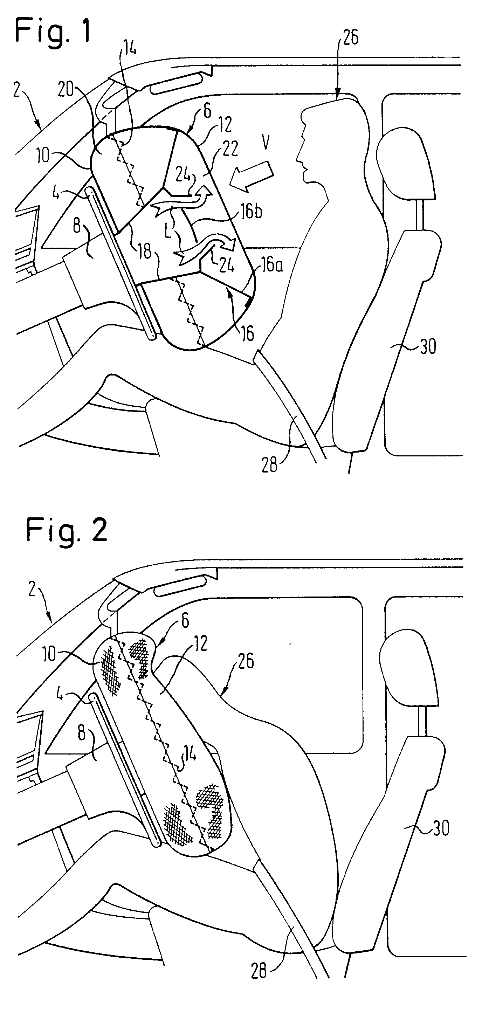

Fig. 1 zeigt im Schnitt ein Fahrzeug 2, an dessen Lenkrad 4 ein allgemein mit 6 bezeichneter Gassack angeordnet ist. Der Gassack 6 ist normalerweise unter einem Deckel in der Mitte des Lenkrades 4 zusammengefaltet, aber in Fig. 1 in einem prallen Zustand gezeigt, in den er bei einer Fahrzeugkollision durch eine in einer Lenkradnabe 8 integrierte, in den Figuren nicht sichtbare Aufblasvorrichtung aufgeblasen worden ist.

Der Gassack 6 enthält ein dem Lenkrad 4 zugewandtes Unterteil 10 und ein davon abgewandtes Oberteil 12, die durch eine Naht 14 miteinander verbunden sind. Das Unterteil 10 weist eine relativ große Gasdurchlässigkeit auf, während das Oberteil 12 aus einem relativ dichten Gewebe gebildet ist. Eine Zwischenwand 16 aus relativ dichtem Gewebe ist entlang ihres äußeren Umfangs ringförmig an der Innenseite des Oberteils 12 befestigt, so daß sie quer durch den Gassack 6 verläuft. Fangbänder 18, die von einem am Lenkrad 4 befestigten Bereich des Unterteils 10 ausgehen, greifen am Übergang zwischen einem ringförmigen äußeren Wandungsteil 16a und einem kreisförmigen inneren Wandungsteil 16b der Zwischenwand 16 an und legen beim Aufblähen des Gassacks 6 deren Stellung fest, in der die Zwischenwand 16 den entfalteten Gassack 6 in eine erste Kammer 20 und eine zweite Kammer 22 unterteilt. Ventilklappen 24 in dem Wandungsteil 16b können sich zu der zweiten Kammer 22 hin öffnen und Gase von der ersten Kammer 20 in die zweite Kammer 22 strömen lassen, wie durch Pfeile L angedeutet, schließen jedoch in der entgegengesetzten Strömungsrichtung.

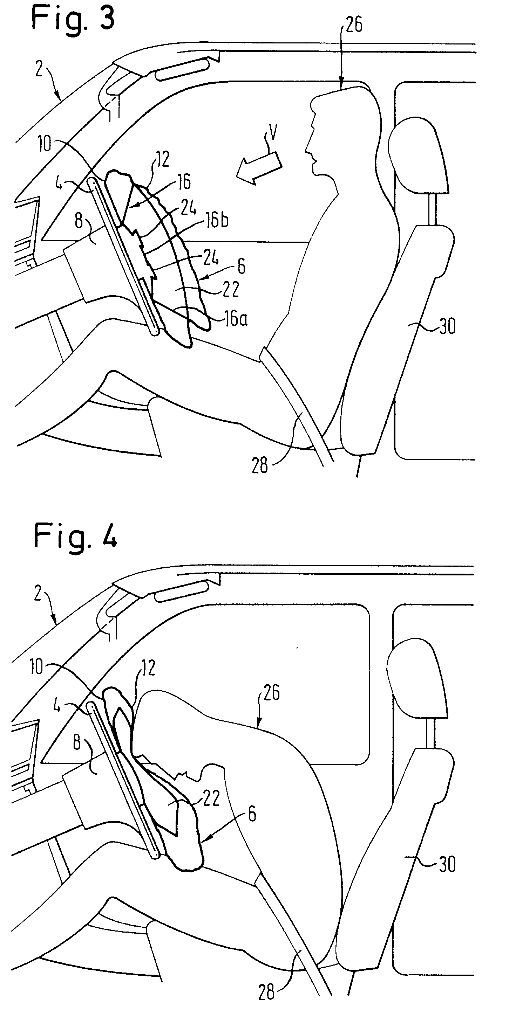

Die besondere Schutzwirkung des Gassacks 6 wird nun anhand der Figuren 1 bis 4 erläutert, die eine Bildfolge bei einem Unfall mit Sekundäraufprall darstellen. Bei der kollisionsbedingten Verzögerung des Fahrzeugs 2 verlagern sich Kopf und Oberkörper eines Fahrzeuginsassen 26 in einer Richtung V nach vorn (Fig. 1). Bei dem dargestellten Rückhaltesystem wird das Becken des Fahrzeuginsassen 26 durch einen Beckengurt 28 am Fahrzeugsitz 30 festgehalten. Gemäß Fig. 2 fängt der Gassack 6 die Bewegung des Fahrzeuginsassen auf, wobei ein Teil sei-ner Bewegungsenergie umgesetzt wird, indem die Gase durch das Gewebe des relativ gasdurchlässigen Unterteils 10 des Gassacks 6 gepreßt werden. Beim Auftreffen des Fahrzeuginsassen 26 entsteht ein Überdruck in der Kammer 22 gegenüber der Kammer 20, so daß sich die Ventilklappen 24 selbsttätig schließen. Fig. 3 zeigt die Situation einen Augenblick später, nachdem der Fahrzeuginsasse 26 seine Bewegung umgekehrt hat und wieder aufrecht im Fahrzeugsitz 30 sitzt. Der Gassack 6 ist jetzt in sich zusammengefallen, bis auf die relativ gasdichte zweite Kammer 22, die nun etwa mittig über dem Lenkrad 4 liegt. Dort schützt sie den Kopf des Fahrzeuginsassen 26 bei einem nochmaligen Aufprall nicht nur vor Verletzungen am Lenkrad 4 selbst (Fig. 4), sondern auch gegenüber der aufgebrochenen Gassackabdeckung und gegenüber nunmehr freiliegenden Teilen der Aufblasvorrichtung.

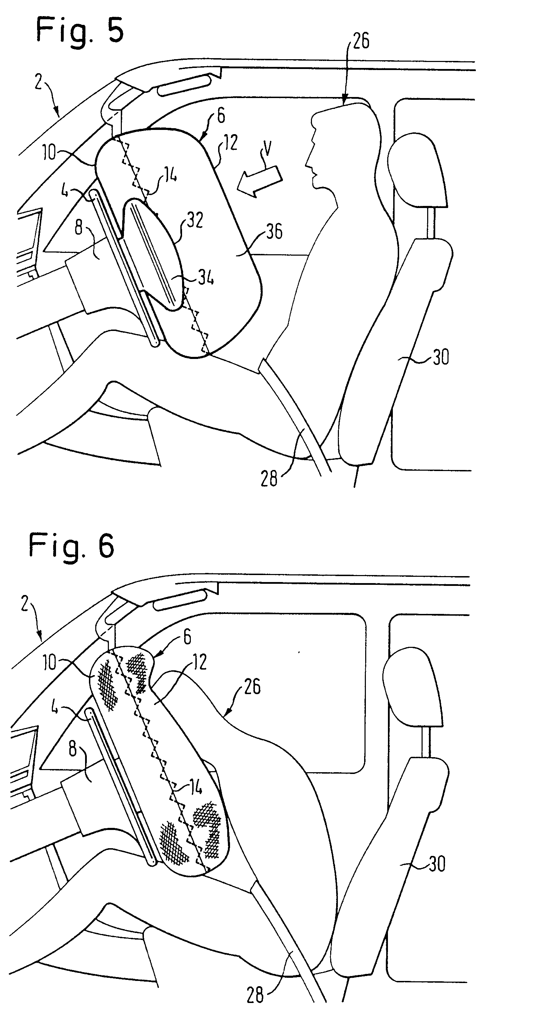

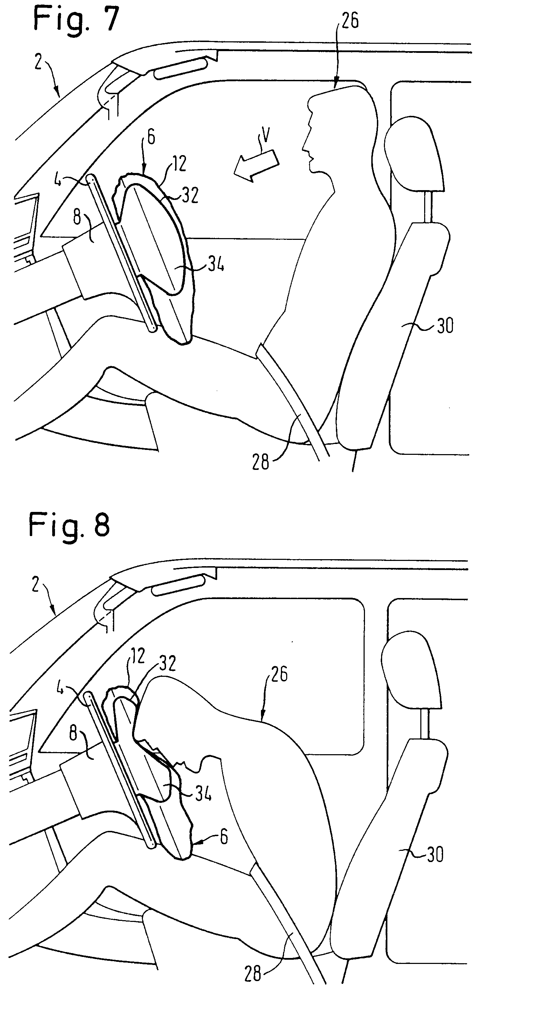

Die Ausführungsform der Figuren 5 bis 8, in denen, soweit bereits beschriebene Bauteile eingezeichnet sind, gleiche Bezugszeichen verwendet sind, unterscheidet sich von der vorstehend beschriebenen Ausführungsform dadurch, daß anstelle einer Zwischenwand 16 innerhalb des Gassacks 6 ein kleinerer Innen-Gassack 32 aus relativ dichtem Gewebe angeordnet ist, der von dem äußeren, durch Unterteil 10 und Oberteil 12 gebildeten Gassack umschlossen ist. Der Innen-Gassack 32 unterteilt das Volumen des Gassacks 6 in eine innere Kammer 34 und eine äußere Kammer 36. Funktionell entspricht die innere Kammer 34 der zweiten Kammer 22, und die äußere Kammer 36 entspricht der ersten Kammer 20 des Gassacks 6 der zuvor beschriebenen Ausführungsform. Der Innen-Gassack 32 ist zum Lenkrad 4 hin offen, wo er mit besonderen Öffnungen der Aufblasvorrichtung verbunden sein kann, die dann sowohl den Innen-Gassack 32 als auch den äußeren Gassack 6 direkt speist. Einfacher ist es, wenn nur der Innen-Gassack 32 direkt mit der Aufblasvorrichtung verbunden ist und der Gassack 6 durch das Gewebe des Innen-Gassacks 32 hindurch gefüllt wird, was aufgrund des hohen Druckes der aus der Aufblasvorrichtung strömenden Gase möglich ist, obwohl der Innen-Gassack 32 relativ dicht ist. In diesem Fall wirkt der Innen-Gassack 32 als Filter für Partikel, die aus der Aufblasvorrichtung austreten.

Auch bei der Ausführungsform der Fig. 5 bietet der relativ dichte Innen-Gassack 32 einen wirksamen Insassenschutz bei einem Sekundäraufprall, wie aus der Bildfolge der Figuren 5 bis 8 ersichtlich ist, die in der Reihenfolge den Figuren 1 bis 4 entsprechen.

## Patentansprüche

1. Gassack-Rückhaltesystem für Fahrzeuge, gekennzeichnet durch einen Gassack (6), der wenigstens zwei Kammern (20, 22; 36, 34) aufweist, von denen die erste, größere (20; 36) die zweite (22; 34) umgibt und durch eine Wandung begrenzt ist, deren Material eine größere Gasdurchlässigkeit aufweist als das die zweite Kammer (22; 34) begrenzende Material.

2. Gassack-Rückhaltesystem nach Anspruch 1, bei dem eine Zwischenwand (16) durch den Gassack (6) verläuft, die ihn in die erste (20) und die zweite Kammer (22) unterteilt.

3. Gassack-Rückhaltesystem nach Anspruch 2, bei dem die erste Kammer (20) mit einer Aufblasvorrichtung in Verbindung steht und in der Zwischenwand (16) wenigstens eine Ventilklappe (24) angeordnet ist, die den Gasdurchtritt aus der ersten (20) in die zweite (22) Kammer zuläßt, in entgegengesetzter Strömungsrichtung aber schließt.

4. Gassack-Rückhaltesystem nach Anspruch 2 oder 3, bei dem an der Zwischenwand (16) Fangbänder (18) zur Festlegung ihrer Lage im entfalteten Gassack (6) befestigt sind.

5. Gassack-Rückhaltesystem nach Anspruch 1, bei dem die zweite Kammer durch einen kleineren Innen-Gassack (32) gebildet ist, den die erste, von einem Außen-Gassack gebildete Kammer (36) umgibt.

6. Gassack-Rückhaltesystem nach Anspruch 5, bei dem die erste (36) und die zweite Kammer (34) beide direkt mit einer Aufblasvorrichtung in Verbindung stehen.

7. Gassack-Rückhaltesystem nach Anspruch 5, bei dem nur die zweite Kammer (34) direkt mit einer Aufblasvorrichtung in Verbindung steht und die erste Kammer (36) indirekt durch die gasdurchlässige Wandung der zweiten Kammer (34) hindurch aufgeblasen wird.
